(19) Europäisches Patentamt
European Patent Office
Office européen des brevets

(11) **EP 2 527 982 A2**

(12) **EUROPEAN PATENT APPLICATION**

(43) Date of publication:
**28.11.2012 Bulletin 2012/48**

(51) Int Cl.:
***G06F 9/50*** *(2006.01)*

(21) Application number: **12162278.1**

(22) Date of filing: **29.03.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **23.05.2011 JP 2011115233**

(71) Applicant: **FUJITSU LIMITED**
**Kawasaki-shi,**
**Kanagawa 211-8588 (JP)**

(72) Inventor: **Imade, Hiroaki**
**Kawasaki-shi, Kanagawa 211-8588 (JP)**

(74) Representative: **Fenlon, Christine Lesley**
**Haseltine Lake LLP**
**Lincoln House, 5th Floor**
**300 High Holborn**
**London WC1V 7JH (GB)**

(54) **Process placement apparatus and process placement method**

(57)     A process placement apparatus (100) which places processes in a plurality of nodes (10 to 25) which are mutually connected via a network includes a network area divider (123) that divides a network area including the plurality of nodes (10 to 25) into a plurality of divided network areas; a process group divider (124) that divides a process group including a plurality of processes into a plurality of divided process groups based on a result of the division of the network area; and a process group placing unit (125) that places each of the plurality of divided process groups in one of the plurality of divided network areas.

FIG.3

**Description**

FIELD

The embodiments discussed herein are directed to a process placement apparatus, a process placement method, and a computer-readable recording medium storing therein a process placement program.

BACKGROUND

In a computer system including a plurality of processors, which are hereinafter referred to as "nodes", each process placed in a node performs a communication with another process placed in another node and thereby a concurrent program is executed conventionally.

A communication processing time between processes is influenced by where a node in which a process is placed locates. For example, when the number of hops for one communication is large, the communication processing time becomes long. Therefore, the computer system, for example, monitors the communication processing time or calculates a relative evaluation value to select an optimum process placement with respect to combinations of processes placed in nodes.

However, since the number of combinations of processes to be placed in nodes is "N!" in total in a case of placing N processes in nodes, the total number of the combinations becomes enormous in optimizing the placement of several thousands of or several tens of thousands of processes. In this case, it is very difficult to select one optimum combination among all the combinations.

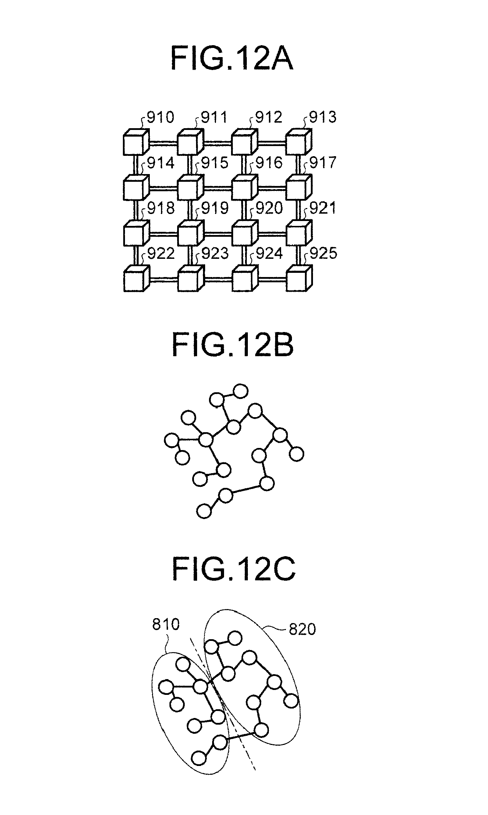

Given this situation, a technique of decreasing the total number of combinations by dividing N processes into process groups each of which includes m processes and performing placement in nodes has been disclosed. The technique of decreasing the total number of combinations will be explained with reference to FIGS. 12A to 12F.

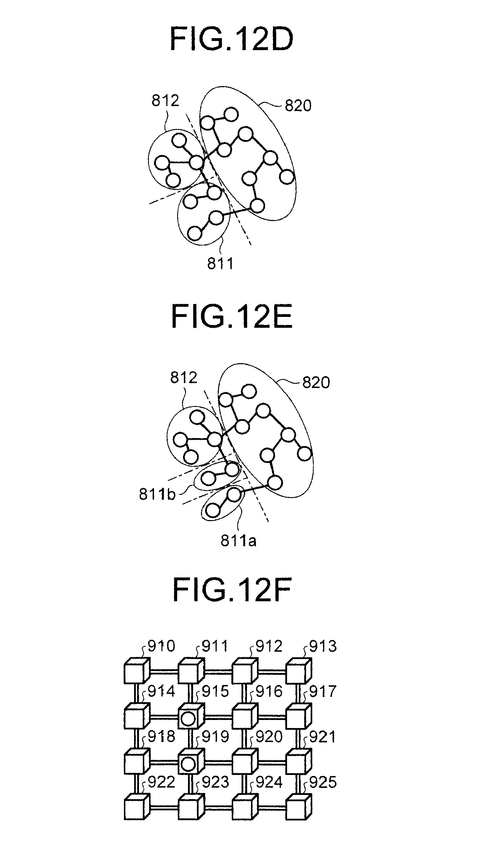

FIG. 12A illustrates an example of a network area formed by connecting sixteen nodes in a mesh structure and FIG. 12B illustrates a communication relation among processes. FIG. 12C illustrates an example of process groups generated by diving the processes illustrated in FIG. 12B once and FIG. 12D illustrates an example of process groups generated by dividing the processes illustrated in FIG. 12B twice. FIG. 12E illustrates an example of process groups generated by dividing the processes illustrated in FIG. 12B three times and FIG. 12F illustrates an example of placing processes belonging to one of the process groups illustrated in FIG. 12E in nodes.

In a case of placing the sixteen processes illustrated in FIG. 12B with respect to a two-dimensional network formed by "4 x 4" nodes in the mesh structure illustrated in FIG. 12A, the computer system executes a processing explained below. Specifically, the computer system groups the processes illustrated in FIG. 12B to generate a process group, divides the created process group, and generates a process group 810 and a process group 820 illustrated in FIG. 12C. The computer system repeats such a division until a given condition is satisfied. Here, a condition that the number of processes belonging to each process group is two will be taken as an example of the given condition and explained.

The computer system next divides the process group 810 and generates a process group 811 and a process group 812 illustrated in FIG. 12D. The computer system then divides the process group 811 and generates a process group 811a and a process group 811b illustrated in FIG. 12E.

Since the number of processes belonging to the process group 811a is two, the computer system determines that the given condition is satisfied. The computer system then places the processes belonging to the process group 811a in a node 915 and a node 919 as illustrated in FIG. 12F. When having placed the processes in the nodes, the computer system optimizes the placement of the processes.

After that, the computer system executes the similar processing repetitively. Specifically, the computer system divides a process group not satisfying the given condition until the given condition is satisfied and places processes belonging to the process group satisfying the given condition in order in respective nodes. The computer system then optimizes the process placement.

In this manner, N processes are not placed in nodes all at once but divided into process groups each of which includes m processes to be placed in nodes in the conventional technique. In this case, the number of combinations becomes "$_NP_m + _{N-m}P_m + \cdots + _mP_m$" and sufficiently smaller than the total number of combinations N! in the case of placing N processes at once in nodes.

However, there is a problem of having a case where a process placement cannot be performed to shorten the communication processing time in the conventional technique described above.

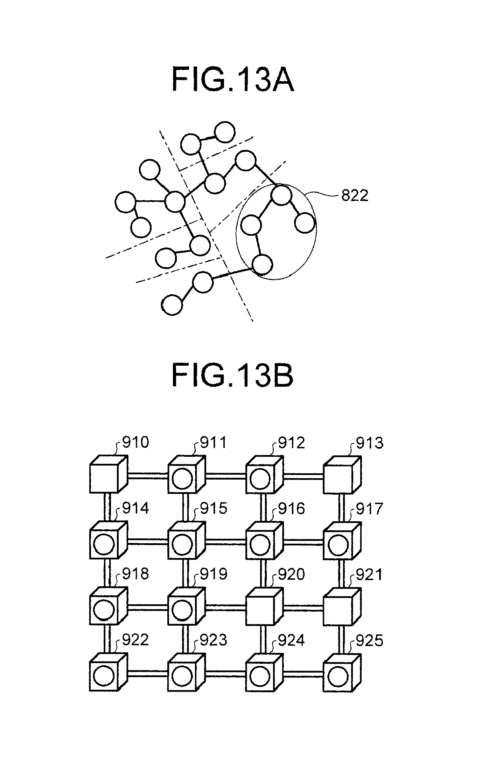

For example, a process group in a subsequent order in node placement has the fewer number of selectable nodes in the conventional technique. An example will be explained with reference to FIGS. 13A and 13B. FIG. 13A illustrates an example of process groups generated by dividing the processes illustrated in FIG. 12B five times. FIG. 13B illustrates an example of processes placed in nodes in the case where the division into the process groups as illustrated in FIG. 13A is performed.

In the case where the processes are divided as illustrated in FIG. 13A, processes belonging to a process group 822 are placed in nodes 910, 913, 920, and 921 illustrated in FIG. 13B. In the case where the processes are placed as illustrated in FIG. 13B, the processes belonging to the process group 822 are not placed in adjacent nodes together. As a result of this, since a process group to be placed last has little choice in selecting nodes, the number of hops in communication within the process group is likely to become large and the number of hops in communication with other process groups is likely to become large. More detailed information of the conventional technique can be obtained in Japanese Translation of PCT International Application Publication No. 2008-516346.

It is desirable to provide a process placement apparatus, a process placement method, and a computer-readable recording medium storing therein a process placement program, the apparatus, the method, and the program enabling a process placement in a manner of shortening a communication processing time.

SUMMARY

According to an embodiment of a first aspect of the invention, a process placement apparatus places processes in a plurality of nodes which are mutually connected via a network. The process placement apparatus includes: a network area divider that divides a network area including the plurality of nodes into a plurality of divided network areas; a process group divider that divides a process group including a plurality of processes into a plurality of divided process groups based on a result of the division of the network area; and a process group placing unit that places each of the plurality of divided process groups in one of the plurality of divided network areas.

According to an embodiment of a second aspect of the invention, a process placement method in which processes are placed in a plurality of nodes which are mutually connected via a network, the method being performed by a computer, includes: dividing a network area including the plurality of nodes into a plurality of divided network areas; dividing a process group including a plurality of processes into a plurality of divided process groups based on a result of the division of the network area; and placing each of the plurality of divided process groups in one of the plurality of divided network areas.

According to an embodiment of a third aspect of the invention, in a non-transitory computer-readable recording medium which stores therein a process placement program enabling placing processes in a plurality of nodes which are mutually connected via a network, the process placement program causes a computer to execute: dividing a network area including the plurality of nodes into a plurality of divided network areas; dividing a process group including a plurality of processes into a plurality of divided process groups based on a result of the division of the network area; and placing each of the plurality of divided process groups in one of the plurality of divided network areas.

BRIEF DESCRIPTION OF DRAWINGS

FIG. 1 illustrates an example of a configuration of a computer system;
FIG. 2A illustrates an example of a network area formed by connecting sixteen nodes in a mesh structure;
FIG. 2B illustrates a communication relation among the sixteen processes;
FIG. 2C illustrates an example of network areas generated by dividing the network area illustrated in FIG. 2A once;
FIG. 2D illustrates an example of process groups generated by dividing the processes illustrated in FIG. 2B once;
FIG. 2E illustrates an example of network areas generated by dividing the network area illustrated in FIG. 2A twice;
FIG. 2F illustrates an example of process groups generated by dividing the processes illustrated in FIG. 2B twice;
FIG. 2G illustrates an example of network areas generated by dividing the network area illustrated in FIG. 2A three times;
FIG. 2H illustrates an example of process groups generated by dividing the processes illustrated in FIG. 2B three times;
FIG. 3 is a block diagram of a configuration of a process placement apparatus;
FIG. 4 illustrates an example of a node placement table;
FIG. 5 illustrates an example of a division rule table;
FIG. 6A illustrates an example of network areas before division;
FIG. 6B illustrates an example of network areas generated by dividing the network areas illustrated in FIG. 6A;
FIG. 7A illustrates an example of process groups before division;
FIG. 7B illustrates an example of process groups generated by dividing the process groups illustrated in FIG. 7A three times;
FIG. 7C illustrates an example of generating subgroups;
FIG. 7D illustrates an example in which the generated subgroups are collected in a process group as a division target;

FIG. 7E illustrates an example of dividing the process group illustrated in FIG. 7D;

FIG. 8 is a flowchart of a procedure of a process placement processing performed by a process placement apparatus;

FIG. 9 is a flowchart of a procedure of a network area division processing performed by the process placement apparatus;

FIG. 10 is a flowchart of a procedure of a process group division processing performed by the process placement apparatus;

FIG. 11 illustrates a computer which executes a process placement program;

FIG. 12A illustrates an example of a network area formed by connecting sixteen nodes in a mesh structure;

FIG. 12B illustrates a communication relation among the sixteen processes;

FIG. 12C illustrates an example of process groups generated by dividing the processes illustrated in FIG. 12B once;

FIG. 12D illustrates an example of process groups generated by dividing the processes illustrated in FIG. 12B twice;

FIG. 12E illustrates an example of process groups generated by dividing the processes illustrated in FIG. 12B three times;

FIG. 12F illustrates an example of placing processes belonging to one of the process groups illustrated in FIG. 12E in nodes;

FIG. 13A illustrates an example of process groups generated by dividing the processes illustrated in FIG. 12B five times; and

FIG. 13B illustrates an example of processes placed in nodes in the case where the processes are divided into the process groups as illustrated in FIG. 13A.

DESCRIPTION OF EMBODIMENTS

Exemplary embodiments of a process placement apparatus, a process placement method, and a recording medium storing therein a process placement program will be explained in detail below with reference to the accompanying drawings. The present invention is not limited to the embodiments. The embodiments may be arbitrarily combined within a scope which does not cause a contradiction in processing contents.

[a] First Embodiment

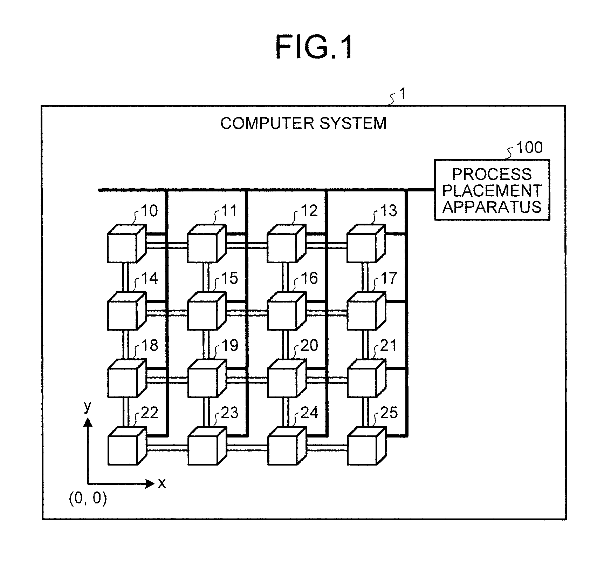

In a first embodiment, an entire configuration of a system, a configuration of a process placement apparatus, a procedure of a processing of the process placement apparatus, advantages, and the like will be explained with reference to FIGS. 1 to 10.

FIG. 1 is illustrates an example of a configuration of a computer system. As illustrated in FIG. 1, a computer system 1 includes nodes 10 to 25 and a process placement apparatus 100. The nodes 10 to 25, among which nodes adjacent to each other are connected in a mesh structure, can communicate with each other. The process placement apparatus 100 is connected to each node by, for example, a local area network (LAN) and the like in a manner that a communication therebetween is allowed. Here, a connection between each node and its adjacent node in the computer system 1 is not limited to the mesh structure connection and may be made in a toroidally-linked state or a looped state.

A node 10, in which a process is placed by the process placement apparatus 100, is a processor including a central processing unit (CPU) and a memory. The process placed in the node 10 mutually performs a communication with other processes placed in other nodes to execute a concurrent program. Since operations of the nodes 11 to 25 are the same as the operation of the node 10, an explanation for them is omitted here.

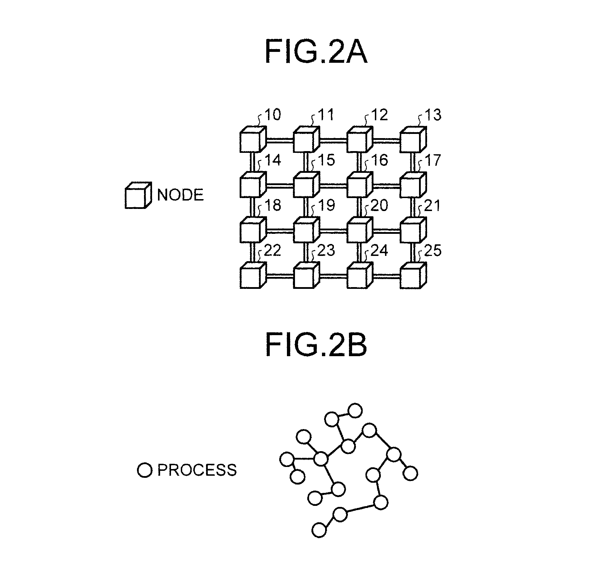

The process placement apparatus 100 divides a network area formed by connecting the nodes 10 to 25 in a mesh structure. Besides, the process placement apparatus 100 divides a process group including a plurality of processes based on a result of the division of the network area. The process placement apparatus 100 then places each of generated process groups to a generated adjacent network area. An operation of determining an initial placement of processes to nodes by the process placement apparatus 100 will be explained with reference to FIGS. 2A to 2H.

FIG. 2A illustrates an example of a network area formed by connecting sixteen nodes in a mesh structure and FIG. 2B illustrates a communication relation among the sixteen processes. The process placement apparatus 100 divides the network area illustrated in FIG. 2A and the processes illustrated in FIG. 2B into process groups.

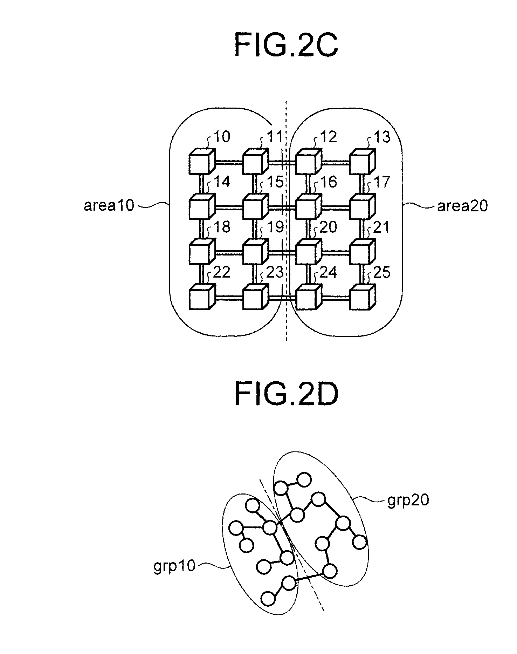

FIG. 2C illustrates an example of network areas generated by dividing the network area illustrated in FIG. 2A once and FIG. 2D illustrates an example of process groups generated by dividing the processes illustrated in FIG. 2B once. The process placement apparatus 100 first divides the network area into an area 10 and an area 20 as illustrated in FIG. 2C. The process placement apparatus 100 also divides the processes into a grp 10 and grp 20 as illustrated in FIG. 2D. The process placement apparatus 100 then associates the generated grp 10 with the area 10 and the generated grp 20 with the area 20.

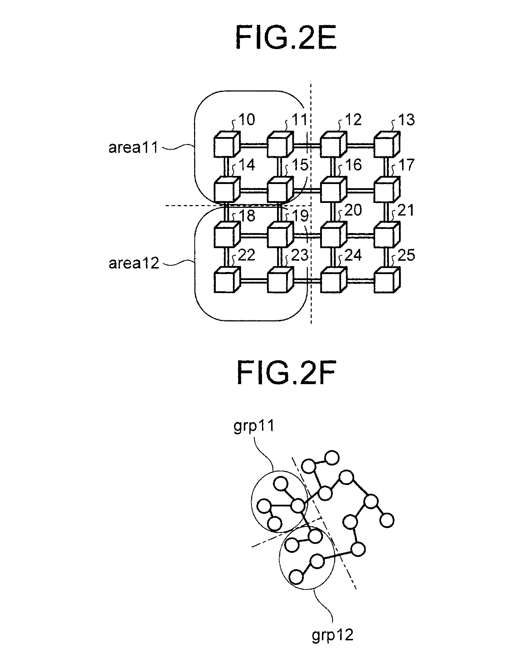

The process placement apparatus 100 next divides the area 10 which is one of the network areas illustrated in FIG. 2C into an area 11 and an area 12 as illustrated in FIG. 2E. The process placement apparatus 100 divides the grp 10 which is one of the process groups illustrated in FIG. 2C into a grp 11 and a grp 12 as illustrated in FIG. 2F. The process placement apparatus 100 then associates the generated grp 11 with the area 11 and the generated grp 12 with the area 12. FIG. 2E illustrates an example of network areas generated by dividing the network area illustrated in FIG. 2A twice and FIG. 2F illustrates an example of process groups generated by dividing the processes illustrated in FIG. 2B twice.

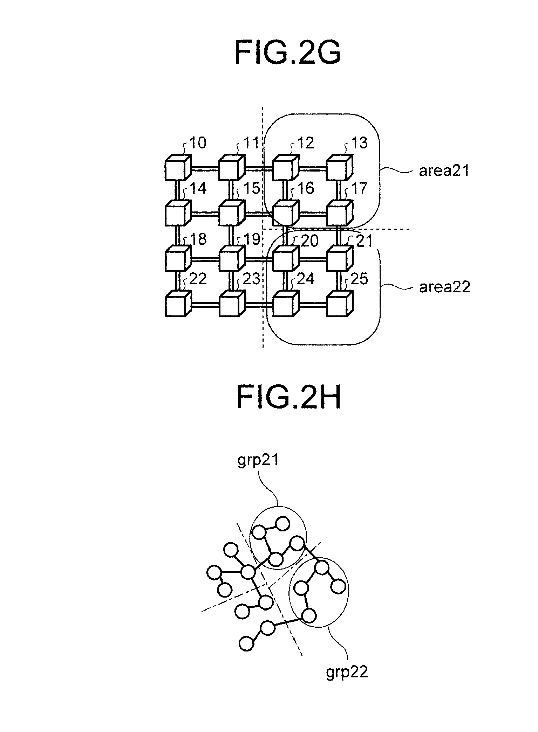

The process placement apparatus 100 divides the area 20 which is the other one of the network areas illustrated in FIG. 2C into an area 21 and an area 22 as illustrated in FIG. 2G. The process placement apparatus 100 divides the grp 20 which is the other one of the process groups illustrated in FIG. 2C into a grp 21 and a grp 22 as illustrated in FIG. 2H. The process placement apparatus 100 then associates the generated grp 21 with the area 21 and the generated grp 22 with the area 22. Here, FIG. 2G illustrates an example of network areas generated by dividing the network area illustrated in FIG. 2A three times and FIG. 2H illustrates an example of process groups generated by dividing the processes illustrated in FIG. 2B three times.

When the network area and the process group are divided predetermined number of times, the process placement apparatus 100 places each process belonging to a process group to each node belonging to an associated network area. The process placement apparatus 100 then determines whether or not the placement of the process placed to each node is optimized. For example, the process placement apparatus 100 calculates an evaluation value which allows relatively evaluating the process placement and determines whether or not the calculated evaluation value falls below a predetermined threshold.

Here, the process placement apparatus 100 determines that the process placement is optimized when determining that the calculated evaluation value falls below the predetermined threshold. On the other hand, the process placement apparatus 100 places processes to respective nodes belonging to the network area associated with the process group in a new combination and calculates another evaluation value when determining that the calculated evaluation value does not fall below the predetermined threshold.

Configuration Of Process Placement Apparatus According To First Embodiment

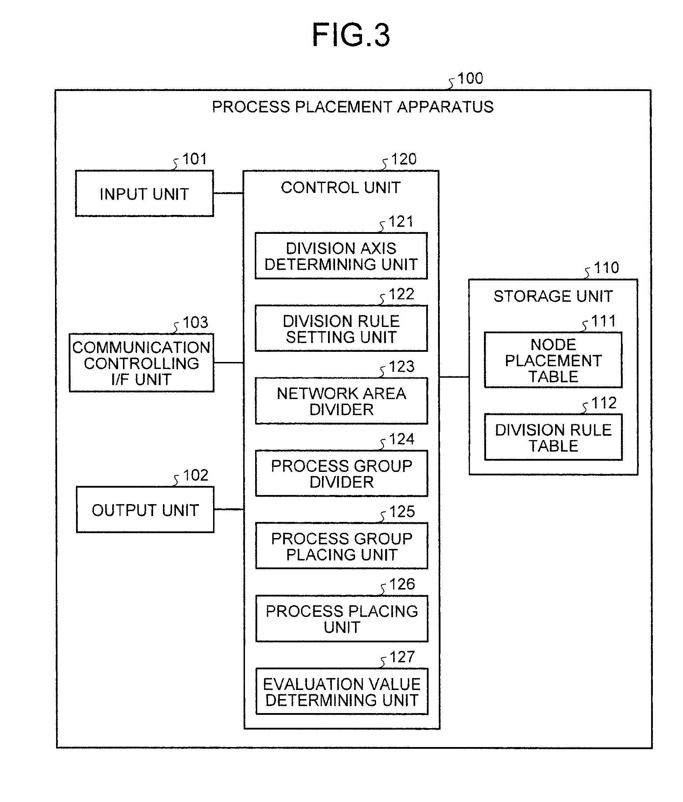

Next, a configuration of the process placement apparatus 100 according to the first embodiment will be explained with reference to FIG. 3. FIG. 3 is a block diagram of the configuration of the process placement apparatus according to the first embodiment. The process placement apparatus 100 according to the first embodiment is provided with an input unit 101, an output unit 102, a communication controlling I/F unit 103, a storage unit 110, and a control unit 120.

The input unit 101 is, for example, a keyset, a mouse, and the like and receives settings of various kinds and operation inputs from a user. The output unit 102 is, for example, a monitor, a display device, and the like and outputs various information.

The communication controlling I/F unit 103 is an interface having at least one communication port and controls information transferred with another device. For example, the communication controlling I/F unit 103 places processes in respective nodes.

The storage unit 110 is, for example, a storage device such as a semiconductor memory element and includes a node placement table 111 and a division rule table 112.

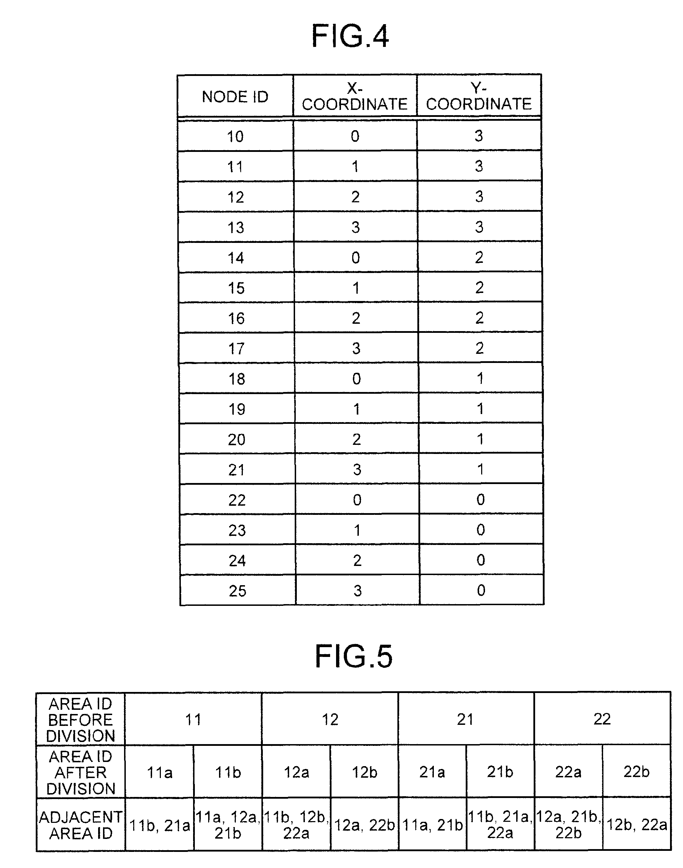

The node placement table 111 stores positional information of respective nodes which are connected in a mesh structure or a toroidally-linked state. An example of the node placement table 111 will be explained with reference to FIG. 4. FIG. 4 illustrates an example of the node placement table 111. For example, the node placement table 111 associates and stores a "node ID", an "X-coordinate", and a "Y-coordinate" as illustrated in FIG. 4.

Here, the "node ID" stored in the node placement table 111 indicates an identifier of a node and values "10", "11", "12", and the like are stored for example. Here, a value stored as the "node ID" and a reference symbol assigned to each node illustrated in FIG. 1 are assumed to correspond to each other for convenience in the explanation.

Besides, the "X-coordinate" indicates an X-coordinate value when positional information of each node is expressed in a two-dimensional coordinate and values "0", "1", "2", and the like are stored for example. Besides, the "Y-coordinate" indicates a Y-coordinate value when the positional information of each node is expressed in a two-dimensional coordinate and values "0", "1", "2", and the like are stored for example. The explanation of the "X-coordinate" and the "Y-coordinate" will be made by treating the node 22 illustrated in FIG. 1 as an origin (0, 0) in the two-dimensional coordinate.

For the "node ID", the "X-coordinate", and the "Y-coordinate" stored in the node placement table 11, respective values set in advance by a user are stored.

Specifically, the node placement table 111 indicates that the node 14 locates at a coordinate point (0, 2) and the node 17 locates at a coordinate point (3, 2) in the example illustrated in FIG. 3. Similarly, the node placement table 111 indicates that the node 15 locates at a coordinate point (1, 2) and the node 11 locates at a coordinate point (1, 3).

The division rule table 112 stores, with respect to each network area, an identifier which is newly assigned to a network area after division and an identifier of a network area adjacent to the network area after division.

An example of the division rule table 112 will be explained with reference to FIG. 5. FIG. 5 illustrates an example of the division rule table. For example, the division rule table 112 associates and stores an "area ID before division", an "area ID after division", and an "adjacent area ID" as illustrated in FIG. 5.

Here, the "area ID before division" stored in the division rule table 112 indicates an identifier of a network area before division and values "11", "12", "21", and the like are stored for example.

The "area ID after division" stored in the division rule table 112 indicates an identifier of a network area after division and values "11a", "11b", "12a", and the like are stored for example.

The "adjacent area ID" stored in the division rule table 112 indicates an identifier of a network area adjacent to the network area after division and values "11b, 21a", "11a, 12a, 21b", "11b, 12b, 22a", and the like are stored for example.

Specifically, the division rule table 112 indicates that a network area identified with the ID "11" is divided into a network area identified with the ID "11a" and a network area identified with the ID "11b" in the example illustrated in FIG. 5. The division rule table 112 also indicates that the network area identified with the ID "11a" generated after division is adjacent to the network area identified with the ID "11b" and the network area identified with the ID "21a". Besides, the division rule table 112 indicates that the network area identified with the ID "11b" generated after division is adjacent to the network area identified with the ID "11a", the network area identified with the ID "12a", and the network area identified with the ID "21b".

The control unit 120 is provided with a division axis determining unit 121, a division rule setting unit 122, a network area divider 123, a process group divider 124, a process group placing unit 125, a process placing unit 126, and an evaluation value determining unit 127. For example, the control unit 120 is realized by an integrated circuit such as an application specific integrated circuit (ASIC) and a field programmable gate array (FPGA) or an electronic circuit such as a central processing unit (CPU) and a micro processing unit (MPU).

The division axis determining unit 121 determines along what axis a network area is divided. For example, the division axis determining unit 121 determines an axis along which the number of nodes aligned is the largest among respective axis directions. For example, in a case of a network area in a mesh structure expressed in a two-dimensional coordinate, it is possible to determine which axis to use for division, the X-axis or the Y-axis.

The division rule setting unit 122 sets an identifier of each network area to be generated in the case of dividing the network area along the axis determined by the division axis determining unit 121 and an identifier of a network area adjacent to each network area to be generated after the division.

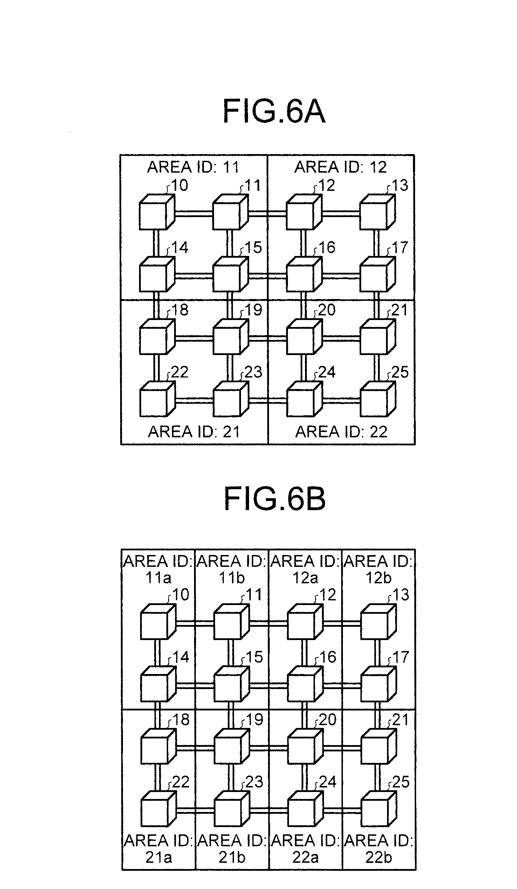

An operation of the division rule setting unit 122 will be explained with reference to FIGS. 6A and 6B. FIG. 6A illustrates an example of network areas before division and FIG. 6B illustrates an example of network areas generated by dividing the network areas illustrated in FIG. 6A.

As illustrated in FIG. 6A, the network area including the nodes 10 to 25 is divided into network areas identified with the IDs "11", "12", "21", and "22". As illustrated in FIG. 6A, the network area identified with the ID "11" includes nodes 10, 11, 14, and 15. Besides, the network area identified with the ID "12" includes nodes 12, 13, 16, and 17.

Similarly as illustrated in FIG. 6A, the network area identified with the ID "21" includes nodes 18, 19, 22, and 23. Besides, the network area identified with the ID "22" includes nodes 20, 21, 24, and 25.

As illustrated in FIG. 6B, the network area including the nodes 10 to 25 is divided into network areas identified with IDs "11a", "11b", "12a", "12b", "21a", "21b", "22a", and "22b". As illustrated in FIG. 6B, the network area identified with the ID "11a" includes nodes 10 and 14. The network area identified with the ID "11b" includes nodes 11 and 15. As illustrated in FIG. 6B, the network area identified with the ID "12a" includes nodes 12 and 16. The network area identified with the ID "12b" includes nodes 13 and 17.

Similarly as illustrated in FIG. 6B, the network area identified with the ID "21a" includes nodes 18 and 22. The network area identified with the ID "21b" includes nodes 19 and 23. As illustrated in FIG. 6B, the network area identified with the ID "22a" includes nodes 20 and 24. The network area identified with the ID "22b" includes nodes 21 and 25.

The division rule setting unit 122 performs the following processing in the case of dividing the network area identified with the ID "11" as illustrated in FIG. 6A into the network areas identified with the IDs "11a" and "11b". Specifically, the division rule setting unit 122 stores "11" for the "area ID before division" and "11a" and "11b" for the "area ID after division" of the division rule table 112. The division rule setting unit 122 specifies network areas identified with the IDs "11b" and "21a" as a network area adjacent to the network area identified with the ID "11a" generated after the division. The division rule setting unit 122 then stores "11b" and "21a" for the "adjacent network area ID" with respect to "11a" for the "area ID after division" of the division rule table 112. Similarly, the division rule setting unit 122 specifies network areas identified with the IDs "11a", "12a", and "22a" as a network area adjacent to the network area identified with the ID "11b" generated after the division. The division rule setting unit 122 then stores "11a", "12a", and "22a" for the "adjacent network area ID" with respect to "11b" for the "area ID after division" of the division rule table 112.

The network area divider 123 divides the network area based on the axis determined by the division axis determining unit 121.

For example, the network area divider 123 specifies a network area number and selects a node included in the specified network area. The network area divider 123 then specifies a coordinate of the selected node from the node placement table 111 and compares the specified coordinate with a value which is half the number of nodes aligned in the division axis direction of the network area.

Here, when the specified coordinate is smaller than the value which is half the number of nodes aligned in the division axis direction, the network area divider 123 adds the selected node to an area 0 as the first area. On the other hand, when the specified coordinate is not smaller than the value which is half the number of nodes aligned in the division axis direction, the network area divider 123 adds the selected node to an area 1 as the second area.

In the case of dividing the network area identified with the ID "11" illustrated in FIG. 6A, the network area divider 123 adds the nodes 10 and 14 to the area 0 as the first area to create the network area identified with the ID "11a" illustrated in FIG. 6B. Besides, in the case of dividing the network identified with the ID "11" illustrated in FIG. 6A, the network area divider 123 adds the nodes 11 and 15 to the area 1 as the second area to create the network area identified with the ID "11b" illustrated in FIG. 6B.

The process group divider 124 divides a process group including a plurality of processes based on a result of the network area division by the network area divider 123.

For example, the process group divider 124 determines whether or not a subgroup can be generated. Here, a set of process groups generated via division is defined as a subgroup when a network area in which a process group generated via division is adjacent to a network area in which a process group as a division target is placed.

The process group divider 124 divides a process group by using a graph division tool such as a METIS, for example, when determining that a subgroup cannot be generated. On the other hand, when determining that a subgroup can be generated, the process group divider 124 collects processes included in a generated process group as one process and makes the one process included in the process group as the division target. The process group divider 124 then uses a graph division tool such as the METIS to divide the process group as the division target based on the result of the network area division.

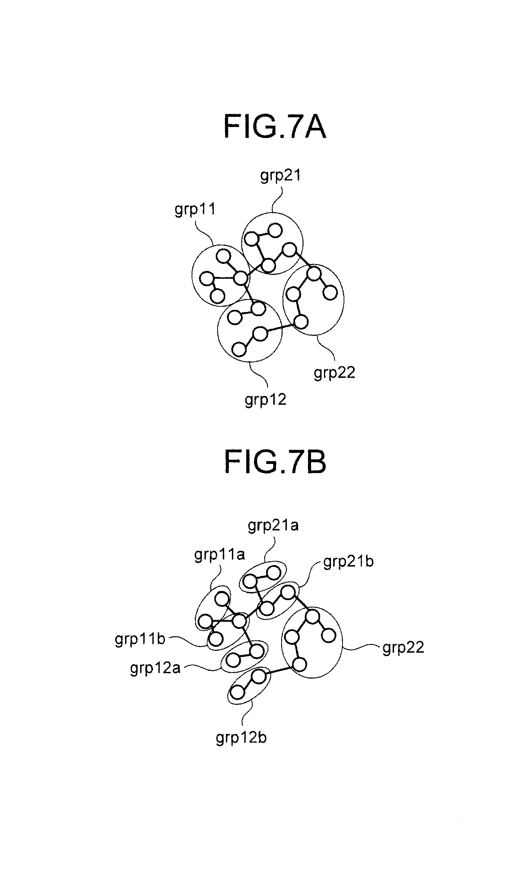

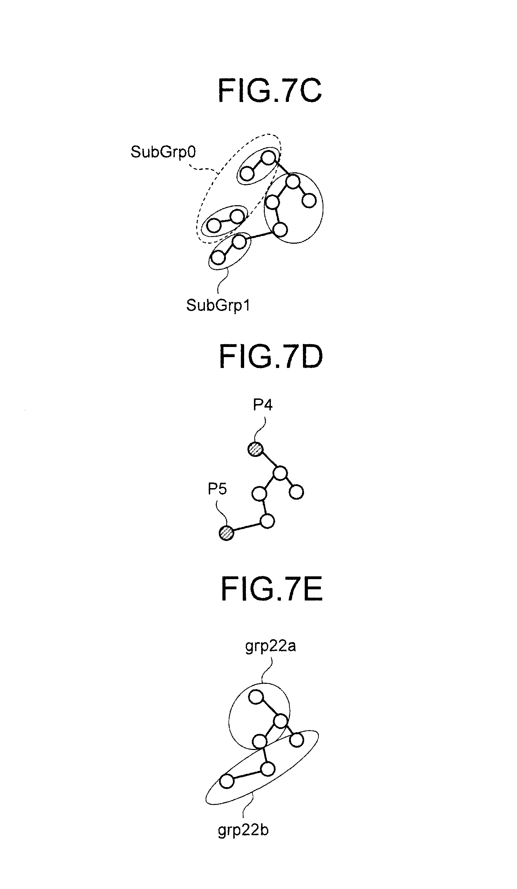

An operation of dividing a process group in the case where a subgroup can be generated by the process group divider 124 will be explained with reference to FIGS. 7A to 7E. FIG. 7A illustrates an example of process groups before division and FIG. 7B illustrates an example of process groups generated by dividing the process groups illustrated in FIG. 7A three times. FIG. 7C illustrates an example of generating subgroups, FIG. 7D illustrates an example in which the generated subgroups are collected in the process group as a division target, and FIG. 7E illustrates an example of dividing the process group illustrated in FIG. 7D.

The process group divider 124 divides the process groups including the grp 11, grp 12, grp 21, and grp 22 illustrated in FIG. 7A to generate process groups illustrated in FIG. 7B. In the process groups illustrated in FIG. 7B, the grp 11a, grp 11b, grp 12a, grp 12b, grp 21a, and grp 21b are included each as a group after division. A group after division is configured to be registered in Grp.

In FIG. 7C, the process group divider 124 selects a subgroup. The process group divider 124 determines that the group IDs generated after the division of the grp 22 are 22a and 22b from the division rule table 112 illustrated in FIG. 5. Then, the process group divider 124 specifies the network areas identified with the IDs "12a" and "21b" as network areas adjacent to the network area identified with the ID "22a". The process group divider 124 specifies the network area identified with the ID "12b" as a network area adjacent to the network area identified with the ID "22b".

Based on this, when a subgroup adjacent to the network area identified with the ID "22a" is set to be a SubGrp 0, the process group divider 124 selects the grp 12a and the grp 21b as the SubGrp 0. When a subgroup adjacent to the network area identified with the ID "21b" is set to be a SubGrp 1, the process group divider 124 selects the grp 12b as the SubGrp 1. Since the grp 12a, grp 21b, and grp 12b are already registered in SubGrp, the process group divider 124 generates the grp 12a and grp 21b as the SubGrp 0 and the grp 12b as the SubGrp 1.

In FIG. 7D, the process group divider 124 collects the SubGrp 0 and the SubGrp 1 as one process to generate a new grp. While there are four processes included in the grp 12a and grp 21b in the SubGrp 0, the process group divider 124 collects the four processes as one process p4. A communication between the process p4 and another process is a combination of communications performed by processes in the grp 12a and grp 21b. The process group divider 124 similarly collects the processes in the SubGrp 1 as one process p5. The process group divider 124 collects the processes p4 and p5 in the grp 22 to generate a new process group.

FIG. 7E illustrates a division of the process group illustrated in FIG. 7D into two process groups. In the divided two process groups, the process group divider 124 sets the process group including the process p4 as a grp 22a and the process group including the process p5 as a grp 22b. The process group divider 124 registers the generated process groups grp 22a and grp 22b in Grp. Here, the process group divider 124 deletes the process p4 from the grp 22a and the process p5 from the grp 22b in the registration in Grp.

The process group placing unit 125 places respective process groups generated via the division performed by the process group divider 124 in the network areas which are generated via the division by the network area divider and adjacent to each other.

For example, the process group placing unit 125 places the grp 11a illustrated in FIG. 7B in the network area identified with the ID "11a" illustrated in FIG. 6B and places the grp 11b illustrated in FIG. 7B in the network area identified with the ID "11b" illustrated in FIG. 6B. Similarly, the process group placing unit 125 places the grp 21a illustrated in FIG. 7B in the network area identified with the ID "21a" illustrated in FIG. 6B and places the grp 21b illustrated in FIG.

7B in the network area identified with the ID "21b" illustrated in FIG. 6B.

The process placing unit 126 places, in respective nodes belonging to a network area, respective processes belonging to a process group placed by the process group placing unit 125 in the network area. For example, the process placing unit 126 places one of the processes of the grp 11a illustrated in FIG. 7B in the node 10 illustrated in FIG. 6B and places the other one of the processes of the grp 11a illustrated in FIG. 7B in the node 14. Similarly, the process placing unit 126 places one of the processes of the grp 21a illustrated in FIG. 7B in the node 18 illustrated in FIG. 6B and places the other one of the processes of the grp 21a illustrated in FIG. 7B in the node 22.

The evaluation value determining unit 127 determines whether or not the placement of processes placed by the process placing unit 126 in respective nodes is optimized. For example, the evaluation value determining unit 127 calculates an evaluation value F which allows evaluating the process placement by using following equation (A).

$$F = \sum_{i,j \in all\ processes} \{hop\,(node\,(i),node\,(j)) \times size\,(i,j)\} \qquad (A)$$

In equation (A), "{hop(node(i),node(j)) }" indicates the number of hops in the communication between a process at a communication sender (a process executed by a node (i)) and a process at a communication destination (a process executed by a node (j)) and "size(i, j)" indicates a communication volume between the process at the communication sender and the process at the communication destination. Specifically, the evaluation value F is a total value obtained by multiplying the number of communication hops by the communication volume with respect to all combinations of the process at the communication sender and the process at the communication destination. According to equation (A), the evaluation value F becomes small when processes are placed so that the number of communication hops becomes smaller between processes which perform a larger volume of communication.

The evaluation value determining unit 127 then determines whether or not the process placement is optimized by determining whether or not the calculated evaluation value falls below a predetermined threshold. Here, the evaluation value determining unit 127 determines that the process placement is optimized when determining that the calculated evaluation value falls below the predetermined threshold. In this case, the evaluation value determining unit 127 may output, to the output unit 102, a result to the effect that the process placement is optimized.

On the other hand, the evaluation value determining unit 127 determines that the process placement is not optimized when determining that the evaluation value does not fall below the predetermined threshold. The evaluation value determining unit 127 then notifies the process placing unit 126 of the result to the effect that the evaluation value does not fall below the predetermined threshold. As a result of this, the process placing unit 126 places processes in respective nodes belonging to the network area in which the process group is allotted in a new combination.

Procedure of Processing Performed By Process Placement Apparatus According To First Embodiment

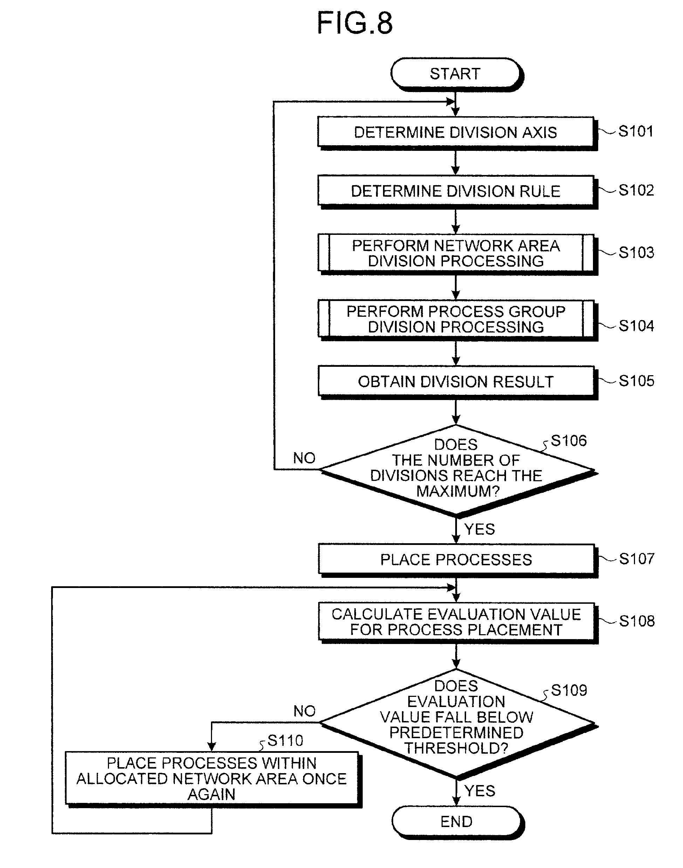

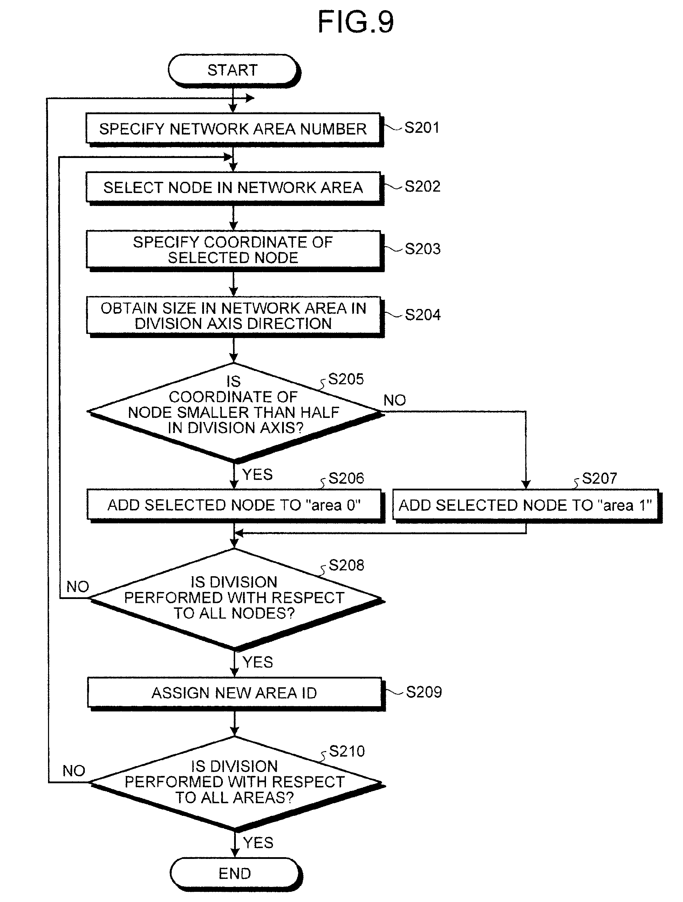

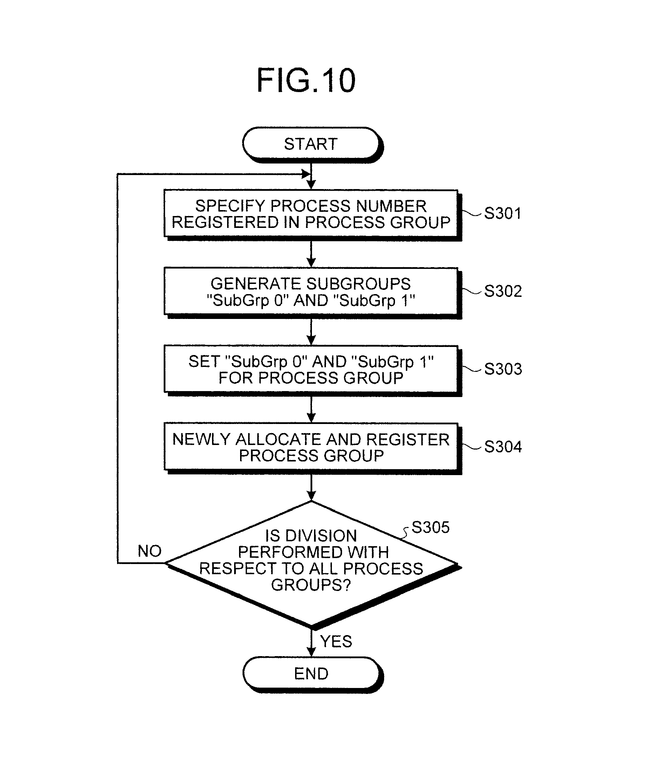

A procedure of a processing performed by the process placement apparatus will be explained next with reference to FIGS. 8 to 10. Here, a process placement processing performed by the process placement apparatus will be explained with reference to FIG. 8, a network area division processing performed by the process placement apparatus will be explained with reference to FIG. 9, and a process group division processing performed by the process placement apparatus will be explained with reference to FIG. 10.

Process Placement Processing

FIG. 8 is a flowchart of a procedure of a process placement processing performed by the process placement apparatus. For example, the process placement apparatus executes a processing upon receiving a process placement from a user. As illustrated in FIG. 8, the process placement apparatus 100 determines a division axis (step S101) and determines a division rule (step S102).

The process placement apparatus 100 executes the network area division processing (step S103) and executes the process group division processing (step S104). Steps S103 and S104 will be explained in detail later. The process placement apparatus 100 then obtains a division result (step S105).

The process placement apparatus 100 determines whether or not the number of divisions reaches the maximum (step S106). Here, when determining that the number of divisions reaches the maximum ("Yes" at step S106), the process placement apparatus 100 determines an initial process placement (step S107). On the other hand, when determining that the number of divisions does not reach the maximum ("No" at step S106), the process placement apparatus 100 moves to step S101.

After determining the initial process placement in the processing at step S107, the process placement apparatus 100 calculates an evaluation value of the process placement (step S108) and determines whether or not the calculated evaluation value falls below the predetermined threshold (step S109). When determining that the evaluation value does not fall below the predetermined threshold ("No" at step S109), the process placement apparatus 100 places processes once again within the placed network area (step S110) and moves to step S108. On the other hand, when determining that the evaluation value falls below the predetermined threshold ("Yes" at step S109), the process placement apparatus 100 ends the processing.

Network Area Division Processing

FIG. 9 is a flowchart of a procedure of the network area division processing performed by the process placement apparatus. This processing corresponds to the processing at step S103 illustrated in FIG. 8.

The process placement apparatus 100 specifies a network area number (step S201) and selects a node among the specified network area (step S202). The process placement apparatus 100 specifies a coordinate of the selected node (step S203) and obtains a size in the network area in the division axis direction (step S204).

The process placement apparatus 100 next determines whether or not the coordinate of the node is smaller than a value which is half the number of nodes in the division axis (step S205). Here, when determining that the coordinate of the node is smaller than the value which is half the number of nodes in the division axis ("Yes" at step S205), the process placement apparatus 100 adds the selected node to the area 0 (step S206). On the other hand, when determining that the coordinate of the node is not smaller than the value which is half the number of nodes in the division axis ("No" at step S205), the process placement apparatus 100 adds the selected node to the area 1 (step S207).

For example, in the case of dividing the network area identified with the ID "11" illustrated in FIG. 6A, the process placement apparatus 100 adds the nodes 10 and 14 to the area 0 as the first area and generates the network area identified with the ID "11a" illustrated in FIG. 6B. In the case of dividing the network area identified with the ID "11" illustrated in FIG. 6A, the process placement apparatus 100 adds the nodes 11 and 15 to the area 1 as the second area and generates the network area identified with the ID "11b" illustrated in FIG. 6B.

After that, the process placement apparatus 100 determines whether or not the division of all nodes is executed (step S208). Here, when determining that the division of all nodes is not performed ("No" at step S208), the process placement apparatus 100 moves to step S202. On the other hand, when determining that the division of all nodes is performed ("Yes" at step S208), the process placement apparatus 100 assigns a divided network area with a new area number (step S209).

The process placement apparatus 100 then determines whether or not the division of all network areas is executed (step S210). Here, when determining that the division of all network areas is not performed ("No" at step S210), the process placement apparatus 100 moves to step S201. On the other hand, when determining that the division of all network areas is performed ("Yes" at step S210), the process placement apparatus 100 ends the processing.

Process Group Division Processing

FIG. 10 is a flowchart of a procedure of a process group division processing performed by the process placement apparatus. This processing corresponds to the processing at step S104 illustrated in FIG. 8.

The process placement apparatus 100 specifies a process number registered as a process group (step S301) and generates subgroups SubGrp 0 and SubGrp 1 (step S302). The process placement apparatus 100 sets the SubGrp 0 and the SubGrp 1 for a process group as a division target (step S303).

The process placement apparatus 100 next divides the process group as a division target and allocates and registers new process groups (step S304). The process placement apparatus 100 then determines whether or not the division of all process groups is executed (step S305).

Here, when determining that the division of all process groups is performed ("Yes" at step S305), the process placement apparatus 100 ends the processing. On the other hand, when determining that the division of all process groups is not performed ("No" at step S305), the process placement apparatus 100 moves to step S301.

Advantages Of First Embodiment

As described above, the process placement apparatus 100 collectively places the divided process groups in the divided network areas and performs an evaluation of the process placement in the first embodiment. Therefore, it is possible in the process placement apparatus 100 to prevent a situation where a room in selecting nodes with respect to processes to be placed later becomes small in the conventional technique. As a result of this, the process placement apparatus 100 is capable of obtaining a process placement which enables a communication processing time to be short sufficiently.

Besides, the total number of combinations in dividing N processes into process groups each of which includes m processes becomes "N/m(m!)". This number becomes smaller than "$_NP_m + {}_{N-m}P_m + \cdots + {}_mP_m$", which is the total number of combinations in dividing N processes into process groups each of which includes m processes and placing them in nodes by using the conventional technique. In other words, it is possible in the process placement apparatus 100 to easily work out an optimum process placement compared to the conventional technique.

[b] Second Embodiment

By the way, the present invention may be realized in various different modes other than the embodiment described above. In a second embodiment, other embodiments included in the present invention will be explained.

System Configuration etc.

All or a part of each processing explained in the embodiment as being performed automatically can be performed manually. Besides, all or a part of each processing explained as being performed manually can be performed automatically in a known method. Furthermore, a processing procedure, a control procedure, and a specific name in the description and the drawings can be arbitrarily modified unless otherwise specified.

The illustrated constituents are only exemplary and explanatory on a functional and conceptual basis, and are not necessarily physically configured as illustrated. For example, the division axis determining unit 121 and the division rule setting unit 122 may be integrated in the process placement apparatus 100. Furthermore, all or a part of a processing function performed by each device may be realized by a CPU and a program to be analyzed and executed by the CPU or may be realized as a hardware by a wired logic.

Program

By the way, processing of various kinds explained in the above embodiment may be realized by making a computer system such as a personal computer and a workstation execute a program prepared in advance. Therefore, an example of a computer system which executes a program having the same function as the above embodiment will be explained below.

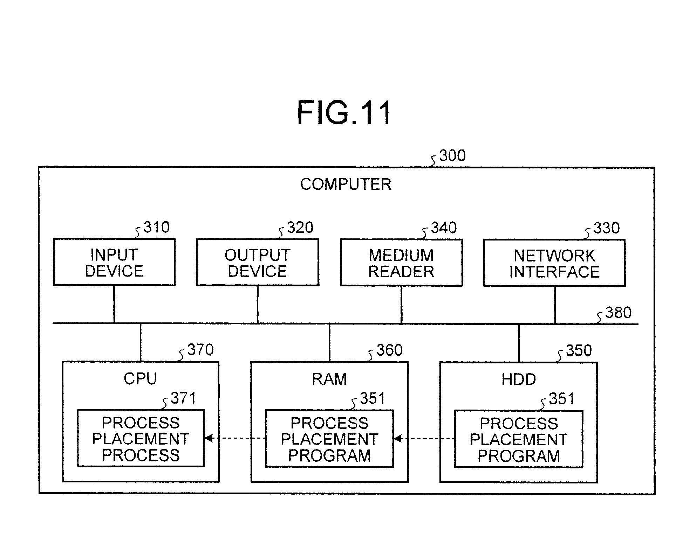

FIG. 11 illustrates a computer which executes a process placement program. As illustrated in FIG. 11, a computer 300 is provided with an input device 310 which receives data and various settings from a user and an output device 320 which notifies a status of the computer and the like. The computer 300 is further provided with a network interface 330 which transmits and receives data with other devices, a medium reader 340, a hard disk drive (HDD) 350, a random access memory (RAM) 360, a CPU 370, and a bus 380. The devices 310 to 370 are connected to the bus 380.

Here, a process placement program 351 which has the same function as the network area divider 123, the process group divider 124, and the process group placing unit 125 illustrated in FIG. 3 is stored in the HDD 350 in advance as illustrated in FIG. 11. The medium reader 340 stores data of various kinds for realizing the process placement program 351. The CPU 370 reads out from the HDD 350 and executes as the process placement process 371 the process placement program 351. Specifically, the process placement process 371 enables executing the same operation as the network area divider 123, the process group divider 124, and the process group placing unit 125.

By the way, the process placement program 351 described above is not always stored in the HDD 350. For example, the process placement program 351 may be stored in a "portable physical medium" such as a flexible disk (FD), a CD-ROM, an MO disk, a DVD, a magneto-optic disk, and IC card to be inserted into the computer 300. The process placement program 351 may be stored in a "fixed physical medium" such as the HDD provided outside of the computer 300. Moreover, the process placement program 351 may be stored in "another computer system" connected to the computer 300 via a public line, the Internet, a local area network (LAN), a wide area network (WAN), and the like. Then, the computer 300 may read out the program from and via them.

In other words, the program is stored in a recording medium such as the "portable physical medium", the "fixed physical medium", and the "communication medium" described above so that a computer can read therefrom. The computer 300 realizes the same function as the embodiment described above by reading out the program from the recording medium. The program explained in this embodiment is not limited to the execution by the computer 300. For example, the invention can be applied to a case where another computer system or a server executes the program and a case where another computer system and a server execute the program in cooperation.

**Claims**

1. A process placement apparatus (100) which places processes in a plurality of nodes (10 to 25) which are mutually connected via a network, the process placement apparatus comprising:

a controller (120) to divide a network area including the plurality of nodes (10 to 25) into a plurality of divided network areas;

divide a process group including a plurality of processes into a plurality of divided process groups based on a result of the division of the network area; and

place each of the plurality of divided process groups in one of the plurality of divided network areas.

2. The process placement apparatus (100) according to claim 1, wherein the controller (120) places each of the plurality of divided process groups in one of the plurality of divided network areas adjacent to each other.

3. The process placement apparatus (100) according to claim 1 or 2, wherein when one divided network area in which one divided process group is placed is adjacent to another divided network area in which the process group to be divided is placed, the controller (120) divides the process group based on the result of the division of the network area after making the one divided process group included in the process group to be divided.

4. The process placement apparatus (100) according to any one of claims 1 to 3, wherein the controller (120) further determines along what axis the network area is divided, and divides the network area based on the axis determined.

5. The process placement apparatus (100) according to claim 4, wherein the controller (120) further sets an identifier of each of the divided network areas to be generated in dividing the network area along the axis determined and an identifier of a network area adjacent to each of the divided network areas generated after the division.

6. The process placement apparatus (100) according to any one of claims 1 to 5, wherein the controller (120) further places, in any one of the nodes (10 to 25) included in one divided network area, the process belonging to one divided process group placed by the controller (120) in the one divided network area.

7. The process placement apparatus (100) according to any one of claims 1 to 6, wherein the controller (120) further calculates an evaluation value which allows evaluating a placement of the processes placed by the controller (120) based on a distance and a communication volume between nodes (10 to 25) and determines whether or not the evaluation value exceeds a predetermined threshold, and places the divided respective process groups in the plurality of divided respective network areas once again in a new combination of the divided process groups and the divided network areas when the evaluation value exceeds the predetermined threshold calculated.

8. A process placement method in which processes are placed in a plurality of nodes (10 to 25) which are mutually connected via a network, the method comprising:

dividing, using a control unit (120), a network area including the plurality of nodes (10 to 25) into a plurality of divided network areas;

dividing, using a control unit (120), a process group including a plurality of processes into a plurality of divided process groups based on a result of the division of the network area; and

placing, using a control unit (120), each of the plurality of divided process groups in one of the plurality of divided network areas.

9. The process placement method according to claim 8, wherein, at the placing, each of the plurality of divided process groups in one of the plurality of divided network areas adjacent to each other.

10. The process placement method according to claim 8 or 9, wherein, at the dividing of the process group, when one divided network area in which one divided process group is placed is adjacent to another divided network area in which the process group to be divided is placed, the process group is divided based on the result of the division of the network area after the one divided process group is included in the process group to be divided.

11. The process placement method according to any one of claims 8 to 10, further comprising determining, using a control unit (120), along what axis the network area is divided, wherein at the dividing of the network area, the network area is divided based on the axis determined at the determining.

12. The process placement method according to claim 11, further comprising

setting, using a control unit (120), an identifier of each of the divided network areas to be generated in dividing the network area along the axis determined at the determining and an identifier of a network area adjacent to each of the divided network areas generated after the division.

13. The process placement method according to any one of claims 8 to 12, further comprising
placing, using a control unit (120), in any one of the nodes (10 to 25) included in one divided network area, the process belonging to one divided process group placed at the placing in the one divided network area.

14. The process placement method according to any one of claims 8 to 13, further comprising
determining, using a control unit (120), after calculating an evaluation value which allows evaluating a placement of the processes placed at the placing of the processes based on a distance and a communication volume between nodes (10 to 25), whether or not the evaluation value exceeds a predetermined threshold, wherein
at the placing of the processes, the divided respective process groups are placed in the plurality of divided respective network areas once again in a new combination of the divided process groups and the divided network areas when the evaluation value exceeds the predetermined threshold calculated at the determining of the evaluation value.

15. A computer program (351) for enabling placing processes in a plurality of nodes (10 to 25) which are mutually connected via a network, which program, when run on a computer, causes that computer (300) to execute:

dividing a network area including the plurality of nodes (10 to 25) into a plurality of divided network areas;
dividing a process group including a plurality of processes into a plurality of divided process groups based on a result of the division of the network area; and
placing each of the plurality of divided process groups in one of the plurality of divided network areas.

# FIG.1

# FIG.2A

NODE

# FIG.2B

PROCESS

# FIG.2C

# FIG.2D

# FIG.2E

# FIG.2F

# FIG.2G

10  11  12  13
14  15  16  17
18  19  20  21
22  23  24  25

area21

area22

# FIG.2H

grp21

grp22

# FIG.3

PROCESS PLACEMENT APPARATUS ⌐100

INPUT UNIT ⌐101

CONTROL UNIT ⌐120

DIVISION AXIS DETERMINING UNIT ⌐121

DIVISION RULE SETTING UNIT ⌐122

COMMUNICATION CONTROLLING I/F UNIT ⌐103

NETWORK AREA DIVIDER ⌐123

PROCESS GROUP DIVIDER ⌐124

OUTPUT UNIT ⌐102

PROCESS GROUP PLACING UNIT ⌐125

PROCESS PLACING UNIT ⌐126

EVALUATION VALUE DETERMINING UNIT ⌐127

STORAGE UNIT ⌐110

NODE PLACEMENT TABLE ⌐111

DIVISION RULE TABLE ⌐112

# FIG.4

| NODE ID | X-COORDINATE | Y-COORDINATE |
|---------|--------------|--------------|
| 10 | 0 | 3 |
| 11 | 1 | 3 |
| 12 | 2 | 3 |
| 13 | 3 | 3 |
| 14 | 0 | 2 |
| 15 | 1 | 2 |
| 16 | 2 | 2 |
| 17 | 3 | 2 |
| 18 | 0 | 1 |
| 19 | 1 | 1 |
| 20 | 2 | 1 |
| 21 | 3 | 1 |
| 22 | 0 | 0 |
| 23 | 1 | 0 |
| 24 | 2 | 0 |
| 25 | 3 | 0 |

# FIG.5

| AREA ID BEFORE DIVISION | 11 | | 12 | | 21 | | 22 | |
|---|---|---|---|---|---|---|---|---|
| AREA ID AFTER DIVISION | 11a | 11b | 12a | 12b | 21a | 21b | 22a | 22b |
| ADJACENT AREA ID | 11b, 21a | 11a, 12a, 21b | 11b, 12b, 22a | 12a, 22b | 11a, 21b | 11b, 21a, 22a | 12a, 21b, 22b | 12b, 22a |

# FIG.6A

AREA ID: 11 | AREA ID: 12

AREA ID: 21 | AREA ID: 22

# FIG.6B

AREA ID: 11a | AREA ID: 11b | AREA ID: 12a | AREA ID: 12b

AREA ID: 21a | AREA ID: 21b | AREA ID: 22a | AREA ID: 22b

# FIG.7A

# FIG.7B

# FIG.7C

SubGrp0

SubGrp1

# FIG.7D

P4

P5

# FIG.7E

grp22a

grp22b

# FIG.8

START

DETERMINE DIVISION AXIS ～S101

DETERMINE DIVISION RULE ～S102

PERFORM NETWORK AREA DIVISION PROCESSING ～S103

PERFORM PROCESS GROUP DIVISION PROCESSING ～S104

OBTAIN DIVISION RESULT ～S105

DOES THE NUMBER OF DIVISIONS REACH THE MAXIMUM? ～S106

NO

YES

PLACE PROCESSES ～S107

CALCULATE EVALUATION VALUE FOR PROCESS PLACEMENT ～S108

DOES EVALUATION VALUE FALL BELOW PREDETERMINED THRESHOLD? ～S109

NO

S110

PLACE PROCESSES WITHIN ALLOCATED NETWORK AREA ONCE AGAIN

YES

END

# FIG.9

START

SPECIFY NETWORK AREA NUMBER — S201

SELECT NODE IN NETWORK AREA — S202

SPECIFY COORDINATE OF SELECTED NODE — S203

OBTAIN SIZE IN NETWORK AREA IN DIVISION AXIS DIRECTION — S204

IS COORDINATE OF NODE SMALLER THAN HALF IN DIVISION AXIS? — S205

NO →

YES ↓

ADD SELECTED NODE TO "area 0" — S206          ADD SELECTED NODE TO "area 1" — S207

IS DIVISION PERFORMED WITH RESPECT TO ALL NODES? — S208

NO

YES ↓

ASSIGN NEW AREA ID — S209

IS DIVISION PERFORMED WITH RESPECT TO ALL AREAS? — S210

NO

YES ↓

END

# FIG.10

```
                    START

          ┌──────────────────────────┐
          │ SPECIFY PROCESS NUMBER   │ ─── S301
          │ REGISTERED IN PROCESS GROUP │
          └──────────────────────────┘

          ┌──────────────────────────┐
          │ GENERATE SUBGROUPS        │ ─── S302
          │ "SubGrp 0" AND "SubGrp 1" │
          └──────────────────────────┘

          ┌──────────────────────────┐
          │ SET "SubGrp 0" AND "SubGrp 1" │ ─── S303
          │ FOR PROCESS GROUP         │
          └──────────────────────────┘

          ┌──────────────────────────┐
          │ NEWLY ALLOCATE AND REGISTER │ ─── S304
          │ PROCESS GROUP             │
          └──────────────────────────┘
```

S305

IS DIVISION PERFORMED WITH RESPECT TO ALL PROCESS GROUPS?

NO

YES

END

# FIG.11

# FIG.12A

# FIG.12B

# FIG.12C

# FIG.12D

# FIG.12E

# FIG.12F

# FIG.13A

822

# FIG.13B

910 911 912 913
914 915 916 917
918 919 920 921
922 923 924 925

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008516346 PCT